# DEMANDE DE BREVET EUROPEEN

(11) **EP 2 505 300 A1**
(43) Date de publication de la demande: **03.10.2012**
(21) Numéro de dépôt: 12160577.8
(22) Date de dépôt: 21.03.2012
(51) Int. Cl.: B23P 9/02, C23C 4/02, F16J 10/04

(54) **Dispositif permettant d'augmenter l'adhérence d'un revêtement par projection thermique réalisé sur une surface métallique, en particulier sur une surface de fût de carter cylindres de moteur de véhicule**

(30) Priorité: 01.04.2011 FR 1152779
(71) Demandeur: Peugeot Citroën Automobiles SA, 78140 Vélizy Villacoublay (FR)
(72) Inventeur: Bordes, Jean Michel, 25700 VALENTIGNEY (FR); Heslon, Christophe, 91270 VIGNEUX SUR SEINE (FR); Andres, David, 25120 MAICHE (FR)

(57) **Abrégé**

Le dispositif comprend un corps principal (1) de forme cylindrique, une molette (10) à profils d'écrouissage, un mécanisme de rotation planétaire faisant tourner la molette (10) sur elle-même et autour du dispositif afin de réaliser sur la surface interne (50A) du fût (50) des empreintes en contre dépouilles par déformation plastique, et un mécanisme de translation permettant de faire descendre la molette (10) dans le fût (50) au fur et à mesure de la réalisation des empreintes en contre dépouilles.

## Description

La présente invention concerne un dispositif permettant d'augmenter l'adhérence d'un revêtement par projection thermique d'une surface métallique. Il s'applique, en particulier mais non exclusivement, aux surfaces des fûts d'un carter cylindres de moteur à explosion avant la réalisation d'un revêtement de ces surfaces des fûts par un procédé de projection thermique.

La présente invention concerne également un procédé permettant d'augmenter l'adhérence d'un revêtement par projection thermique d'une surface métallique, qui utilise un tel dispositif. Ce procédé, dit aussi « procédé de préparation de surface », qui utilise le dispositif de l'invention, concerne en particulier les surfaces des fûts d'un carter cylindres de moteur à explosion.

Par « procédé de projection thermique », on entend, dans la suite du texte, un procédé de traitement de surface par voie sèche, connu en soi, qui permet, de façon classique, d'obtenir un revêtement relativement épais, de quelques centaines de micromètres par exemple.

Le revêtement réalisé par un procédé de projection thermique, en lieu et place d'une chemise en fonte, présente de nombreux avantages, parmi lesquels la possibilité de diminuer la longueur du carter cylindres, d'alléger la masse de ce dernier, d'améliorer les échanges thermiques, de diminuer les pertes mécaniques dues aux frottements et de diminuer l'usure des segments d'étanchéité des pistons dans les cylindres.

De manière connue, la préparation des surfaces des fûts d'un carter cylindres avant l'application d'un revêtement projeté thermiquement comprend quatre étapes principales, à savoir un alésage de finition, une préparation de la surface de l'alésage fini, un revêtement par projection thermique et un rodage de la surface revêtue par projection thermique.

L'étape dite « de préparation de la surface » consiste à créer une rugosité de surface par des techniques essentiellement mécaniques, qui ont pour résultat d'améliorer l'adhérence du revêtement mis en oeuvre par un procédé de projection thermique.

Parmi ces techniques connues, appliquées notamment à des carters cylindres en aluminium ou en fonte, on connaît les techniques de sablage, les techniques de jets d'eau haute pression ou encore les techniques d'usinage mécanique des surfaces.

Toutefois, ces techniques présentent des inconvénients : elles sont, en général, relativement coûteuses, conduisent à des niveaux d'adhérence parfois insuffisants, à des rugosités de surface parfois inacceptables ou bien impliquent des temps de cycles de préparation des surfaces concernées trop importants.

Le but de la présente invention est de fournir un dispositif permettant d'augmenter l'adhérence d'un revêtement par projection thermique d'une surface métallique, appliqué en particulier aux surfaces des fûts d'un carter cylindres de moteur à explosion, lequel dispositif permette d'obvier aux inconvénients des dispositifs et procédés connus de l'art antérieur et mentionnés ci-dessus, et qui soit de conception, de mise en oeuvre et de maintenance simples.

Un autre but de la présente invention est de fournir un tel dispositif, qui soit économique, notamment en permettant de s'affranchir de l'application d'un revêtement promoteur d'adhérence, de type NiAl (Nickel Aluminium) pour les carters en fonte ou NiCr (Nickel Chrome) pour les carters en aluminium, lequel revêtement promoteur d'adhérence est préalable au revêtement par projection thermique.

C'est un autre but de la présente invention de fournir un tel dispositif, qui permette de réduire les coûts en obtenant des temps de cycle de préparation de surface performants, compatibles avec la production de pièces en grande série.

Enfin, c'est également un but de la présente invention de fournir un procédé permettant d'augmenter l'adhérence d'un revêtement par projection thermique d'une surface métallique, en particulier d'une surface de fût d'un carter cylindres de moteur à explosion, qui utilise un tel dispositif et qui soit de mise en oeuvre simple, et qui soit fiable et économique.

Pour parvenir à ces buts, la présente invention a pour objet un dispositif permettant d'augmenter l'adhérence d'un revêtement par projection thermique d'une surface métallique, en particulier mais non exclusivement d'une surface de fût d'un carter cylindres de moteur de véhicule, et ce dispositif nouveau comprend un corps principal de forme cylindrique, une molette à profils d'écrouissage, un mécanisme de rotation planétaire faisant tourner la molette sur elle-même et autour du dispositif afin de réaliser sur la surface du fût des empreintes en contre dépouilles par déformation plastique, et un mécanisme de translation permettant de faire descendre la molette dans le fût au fur et à mesure de la réalisation des empreintes en contre dépouilles.

Selon le mode de réalisation préféré de l'invention, la molette comporte deux profils périphériques, à savoir un profil inférieur apte à créer un sillon dans la surface du fût à préparer et un profil supérieur apte à créer par écrouissage un évasement dans le motif droit formé entre deux sillons, de manière à former les contre dépouilles.

A titre d'exemple non limitatif de l'objet et de la portée de la présente invention, le profil inférieur peut être un profil à section sensiblement carrée ou rectangulaire, apte à créer des sillons de section sensiblement carrée ou rectangulaire dans la surface du fût de carter cylindres.

A titre également d'exemple non limitatif de l'objet et de la portée de la présente invention, le profil supérieur peut être un profil à section en saillie, en « V » ou en pointe, apte à créer par écrouissage un évasement - rabat latéral de matière - dans le motif droit formé entre deux sillons, de manière à former des surfaces en contre dépouilles.

La molette est avantageusement montée sur un axe de rotation à distance de l'axe du corps principal et entre deux roulements à billes, de façon à assurer son mouvement planétaire à la surface du fût.

De préférence, l'axe de rotation de la molette est incliné par rapport à l'axe du corps principal du dispositif d'un angle compris entre 0,1° et 10° d'angle.

A titre d'exemple, le pas entre les deux profils de la molette peut être compris entre 0,1 et 20 mm.

De préférence, la molette peut être réalisée en carbure.

La présente invention a également pour objet un procédé permettant d'augmenter l'adhérence d'un revêtement par projection thermique d'une surface de fût d'un carter cylindres de moteur de véhicule, qui comporte les étapes suivantes, prises en combinaison :
- alésage du fût de carter cylindres,
- préparation de la surface du fût de carter cylindres à l'aide d'un dispositif en forme de molette à deux profils conforme à celui décrit ci-dessus dans ses grandes lignes,
- application d'un revêtement par projection thermique sur la surface interne ainsi préparée du fût de carter cylindres, et
- alésage et rodage de ladite surface du fût.

D'autres buts, avantages et caractéristiques de l'invention apparaîtront dans la description qui suit d'un mode de réalisation préféré, non limitatif de l'objet et de la portée de la présente demande de brevet, accompagnée de dessins dans lesquels :
- la figure 1 est une vue en perspective, schématique, du dispositif de l'invention en position sur le fût de carter cylindres, avant la préparation de la surface du fût préalable à son revêtement par projection thermique,
- la figure 1A est une vue d'un exemple de mécanisme d'entraînement de la molette à profils d'écrouissage du dispositif de la figure 1,
- la figure 2 est une vue de dessus du dispositif de l'invention de la figure 1,
- la figure 3 est une vue en perspective, schématique, de la molette à profils d'écrouissage du dispositif de l'invention,
- les figures 4 et 5 sont des vues de détail, agrandies, montrant les profils supérieur et inférieur, respectivement, de la molette de la figure 3,
- les figures 6 et 7 illustrent, de manière schématique, l'action du profil inférieur de la molette sur la surface interne du fût de carter cylindres,
- les figures 8 et 9 illustrent, de manière schématique, l'action du profil supérieur de la molette sur la surface interne du fût de carter cylindres déjà déformée plastiquement par l'action du profil inférieur,
- la figure 10 illustre la faible adhérence d'un revêtement projeté thermiquement sur une surface qui n'a pas été préparée avec le dispositif selon la présente invention, et
- la figure 11 illustre la forte adhérence d'un revêtement projeté thermiquement sur une surface qui a été préalablement préparée avec le dispositif selon la présente invention.

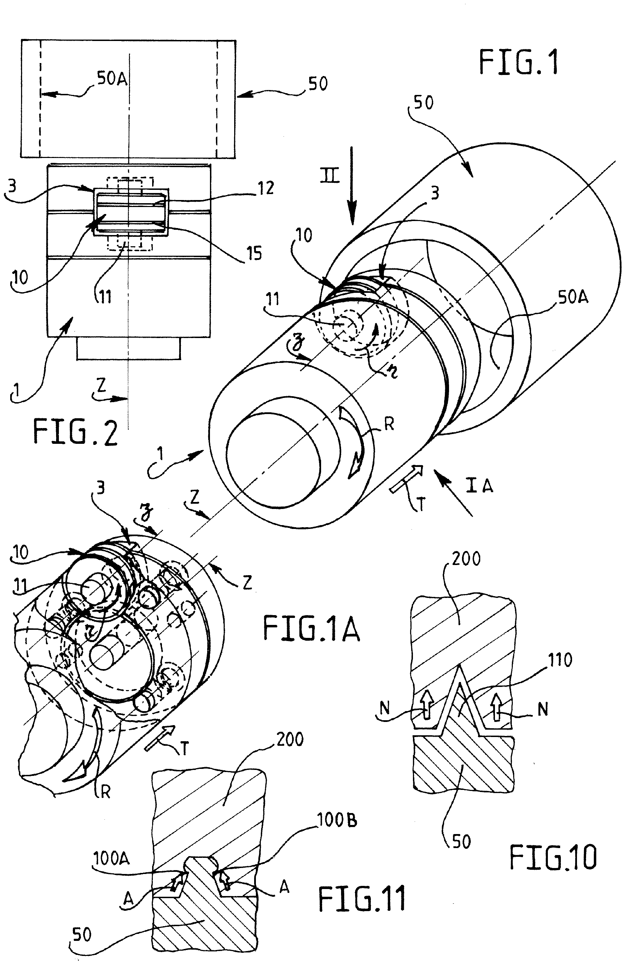

En référence au dessin de la figure 1, on a représenté un exemple de dispositif selon la présente invention qui a pour fonction de créer sur la surface interne des fûts d'un carter cylindres des empreintes de surface en contre dépouilles par écrouissage, c'est-à-dire de créer des déformations plastiques permanentes sous l'action de fortes contraintes qui lui sont appliquées.

Ce dispositif se présente sous la forme d'un outil de moletage, de référence générale 1, de forme générale sensiblement cylindrique, qui comprend une molette a profils d'écrouissage, de référence générale 10, et un mécanisme de rotation planétaire de type classique, connu en soi, (par conséquent non décrit en détail mais seulement schématiquement représenté à titre d'exemple sur le dessin de la figure 1A), de type classique et connu en soi, faisant tourner la molette 10 sur elle-même (rotation « r » d'axe « « z ») et autour du dispositif (rotation « R » d'axe « Z ») afin de réaliser sur la surface interne 50A du fût 50 des empreintes en contre dépouilles. Un mécanisme de translation permet de faire descendre la molette 10 (sens de la flèche « T » de la figure 1) dans le fût 50 de carter cylindres au fur et à mesure de la réalisation des empreintes en contre dépouilles.

La molette 10, montée sur l'outil 1 par l'intermédiaire de l'arbre 11, fait légèrement saillie vers l'extérieur de la surface périphérique de l'outil 1, à travers une ouverture sensiblement rectangulaire référencée 3 de l'outil 1 (figure 2).

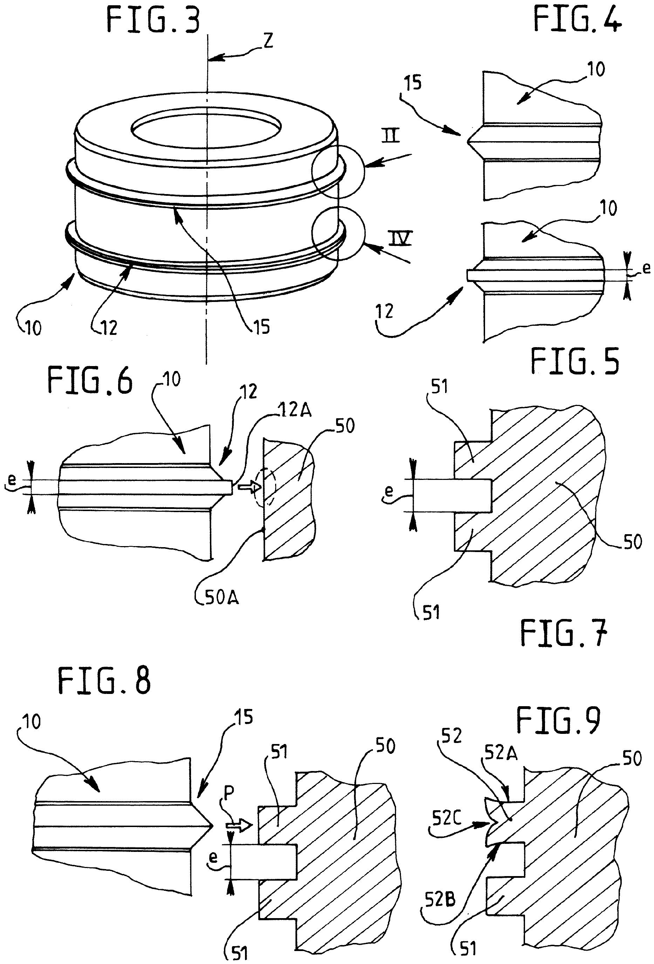

En référence principalement au dessin de la figure 3, la molette 10 comporte deux profils circulaires périphériques, à savoir un profil inférieur 12 apte à créer un sillon dans la surface interne 50A du fût 50 à préparer et un profil supérieur 15 apte à créer par écrouissage un évasement dans le motif droit formé entre deux sillons, de manière à former les profils ou empreintes à contre dépouilles.

Les profils inférieurs et supérieur, respectivement 12 et 15, et leur action sur la surface interne 50A du fût de carter cylindres sont mieux représentés sur les dessins des figures 4 à 9.

Le profil inférieur 12 (figures 5, 6 et 7) est conçu pour créer un sillon de type motif droit, à section sensiblement carrée ou rectangulaire. A cette fin, le profil 12 comporte une section 12A, d'épaisseur axiale « e » (figure 6), qui « entre » en premier dans la surface interne 50A du fût 50 et crée les empreintes 51, séparées d'une distance ou pas de valeur « e », sur ladite surface interne 50A du fût 50, comme montré sur le dessin de la figure 7. La flèche de la figure 6 illustre le sens de la pénétration du profil 12 dans la surface interne 50A du fût 50 de carter cylindres.

Le passage secondaire du profil supérieur 15 (figures 4, 8 et 9) est conçu pour créer le profil évasé final représenté sur le dessin de la figure 9. A cette fin, le profil 15 comporte une section en saillie, en « V » ou en pointe, qui « entre » dans les empreintes 51 pour créer les empreintes 52 à contre dépouilles 52A et 52B sur la surface interne 50A du fût 50, comme montré sur le dessin de la figure 9. La référence 52C désigne l'évasement crée par la pénétration du profil 15 à section en pointe ou en « V » sur l'empreinte 51. La flèche « P » de la figure 8 illustre le sens de la pénétration du profil 15 dans le profil droit 51 de la surface interne du fût 50 de carter cylindres.

Il va de soi que les sections des profils supérieur et inférieur, 15 et 12 respectivement, sont données à titre d'exemples et peuvent être différentes de ceux décrits ci-dessus et représentés sur les figures 3 à 9.

La molette 10 à double profil est montée sur un axe « z » entre deux roulements à billes afin d'assurer son mouvement planétaire à la surface des fûts. L'inclinaison de la molette 10, qui descend dans le fût 50 de carter cylindres par rotation, peut prendre des angles compris entre 0,1 et 10° . Le pas entre les deux profils de molette peut être compris entre 0,1 et 20 mm. En optimisant ces données géométriques, on s'assure d'obtenir un profil primaire droit, puis un profil secondaire final évasé en contre dépouille par déformation plastique permanente du profil primaire droit.

La géométrie et la force d'application de chaque profil, supérieur et inférieur, de la molette 10 sur la surface interne 50A des fûts 50 de carter cylindres permet de maîtriser la profondeur et la largeur du profil primaire droit 51 et l'évasement 52C dudit profil primaire en contre dépouille.

A titre d'exemple non limitatif de l'objet et de la portée de la présente invention, la molette peut être inclinée d'un angle de 0,46° d'angle pour suivre un pas de 0,3 mm par tour.

Il va de soi que les deux profils 12 et 15 peuvent, en variante, être portés par deux molettes différentes.

La figure 10 illustre, de manière très schématique, la faible adhérence d'un revêtement 200 projeté thermiquement sur la surface interne d'un fût 50 non préparée selon le procédé de la présente invention. En l'absence d'un profil en contre dépouilles, tel que le profil 110, l'arrachement du revêtement, illustré par les flèches « N », est plus aisé : il n'y a pas d'ancrage du revêtement.

De façon différente, comme représenté très schématiquement sur le dessin de la figure 11, les contre dépouilles 100A et 100B réalisées des deux côtés des empreintes rendent beaucoup plus difficile l'arrachement du revêtement 200. Cette difficulté est illustrée par les flèches « A ».

La réalisation de motifs avec contre dépouilles permet d'augmenter substantiellement les efforts d'arrachement - de décollement - des revêtements projetés thermiquement. Ainsi, ces efforts, qui sont compris entre 10 et 50 MPa (« MPa » signifiant Méga Pascal) pour des profils sans contre dépouilles, atteignent des valeurs comprises entre 40 MPa et 100 MPa pour des profils de motifs avec contre dépouilles.

Il importe de noter que, dans le cas des motifs avec contre dépouilles, les valeurs des efforts d'arrachement dépendent de la hauteur, de la largeur et de l'espacement des motifs. A titre d'exemple, on a montré expérimentalement que plus on augmente la hauteur des motifs à contre dépouilles plus l'adhérence des revêtements projetés thermiquement est importante, du moins pour des hauteurs de motifs allant jusqu'à 100 µm environ.

Le dispositif décrit ci-dessus de préparation de la surface d'un fût de carter cylindres préalable au revêtement par projection thermique présente de nombreux avantages, parmi lesquels les avantages suivants :
- le dispositif constitue un outil unique, qui intègre deux profils différents d'écrouissage, en lieu et place de deux outils différents porteurs, chacun, d'un profil,
- les motifs en contre dépouilles obtenus avec le dispositif de l'invention permettent d'obtenir des résistances à l'arrachement des revêtements projetés thermiquement très élevées, ce qui satisfait les développements actuels sur les moteurs à explosion dont le rapport poids/puissance est de plus en plus faible, ce qui implique des contraintes thermomécaniques importantes sur les carters cylindres,
- il permet de s'affranchir de l'application d'un revêtement promoteur d'adhérence, préalable au revêtement projeté thermiquement,
- il permet de réduire les temps de cycle de préparation des surfaces avant revêtement projeté thermiquement, lesquels temps de cycles sont alors plus performants et deviennent compatibles avec la production de pièces en grande série.

Bien entendu, la présente invention n'est pas limitée au mode de réalisation décrit et représenté ci-dessus à titre d'exemple ; d'autres modes de réalisation peuvent être conçus par l'homme de métier sans sortir du cadre et de la portée de la présente invention.

## Revendications

1. Dispositif permettant d'augmenter l'adhérence d'un revêtement par projection thermique d'une surface métallique, en particulier mais non exclusivement d'une surface (50A) de fût (50) d'un carter cylindres de moteur de véhicule, **caractérisé en ce que** ledit dispositif comprend un corps principal (1) de forme cylindrique, une molette (10) à profils d'écrouissage, un mécanisme de rotation planétaire faisant tourner la molette (10) sur elle-même et autour du dispositif afin de réaliser sur la surface (50A) du fût (50) des empreintes en contre dépouilles par déformation plastique, et un mécanisme de translation permettant de faire descendre la molette (10) dans le fût (50) au fur et à mesure de la réalisation des empreintes en contre dépouilles.

2. Dispositif selon la revendication 1, **caractérisé en ce que** la molette (10) comporte deux profils périphériques, à savoir un profil inférieur (12) apte à créer un sillon dans la surface (50A) du fût (50) à préparer et un profil supérieur (15) apte à créer par écrouissage un évasement dans le motif droit (51) formé entre deux sillons, de manière à former la contre dépouille.

3. Dispositif selon la revendication 2, **caractérisé en ce que** ledit profil inférieur (12) est un profil à section (12A) sensiblement carrée ou rectangulaire, apte à créer des sillons de section sensiblement carrée ou rectangulaire dans la surface (50A) du fût (50) de carter cylindres.

4. Dispositif selon l'une quelconque des revendications 2 et 3, **caractérisé en ce que** ledit profil supérieur (15) est un profil à section en saillie, en « V » ou en pointe, apte à créer par écrouissage un évasement (52C) dans le motif droit (52) formé entre deux sillons, de manière à former des contre dépouilles (52A, 52B).

5. Dispositif selon l'une quelconque des revendications 1 à 4, **caractérisé en ce que** la molette (10) est montée sur un axe de rotation (« z ») à distance de l'axe (« Z ») du corps principal (1) et entre deux roulements à billes, de façon à assurer son mouvement planétaire à la surface du fût (50).

6. Dispositif selon la revendication 5, **caractérisé en ce que** l'axe de rotation (« z ») de la molette (10) est incliné par rapport à l'axe (« Z ») du corps principal (2) du dispositif d'un angle compris entre 0,1° et 10° d'angle.

7. Dispositif selon l'une quelconque des revendications 2 à 6, **caractérisé en ce que** le pas entre les deux profils (12, 15) de la molette (10) est compris entre 0,1 et 20 mm.

8. Dispositif selon l'une quelconque des revendications 1 à 7, **caractérisé en ce que** la molette (10) est réalisée en carbure.

9. Procédé permettant d'augmenter l'adhérence d'un revêtement par projection thermique d'une surface (50A) de fût (50) d'un carter cylindres de moteur de véhicule, **caractérisé par** les étapes suivantes, prises en combinaison :
- alésage du fût (50) de carter cylindres,
- préparation de la surface (50A) du fût (50) de carter cylindres à l'aide du dispositif en forme de molette à deux profils conforme à l'une quelconque des revendications 1 à 6,
- application d'un revêtement par projection thermique sur la surface interne (50A) ainsi préparée du fût (50) de carter cylindres, et
- alésage et rodage de ladite surface (50A) du fût (50).
